# EUROPÄISCHE PATENTSCHRIFT

(11) **EP 0 509 223 B1**
(45) Veröffentlichungstag und Bekanntmachung des Hinweises auf die Patenterteilung: **17.08.1994**
(21) Anmeldenummer: 92103736.2
(22) Anmeldetag: 04.03.1992
(51) Int. Cl.: F01P 11/02

(54) **Verschlussdeckel für einen Behälter, insbesondere einen Kraftfahrzeugkühler**
Closure cap for a container, especially for a motor vehicle radiator
Bouchon pour un récipient, notamment pour un radiateur d'un véhicule automobile

(30) Priorität: 08.03.1991 DE 4107525
(43) Veröffentlichungstag der Anmeldung: 21.10.1992
(73) Patentinhaber: B L A U GmbH, D-40764 Langenfeld (DE)
(72) Erfinder: Scharrer, Konrad, W-4010 Hilden (DE)
(74) Vertreter: Schaumburg, Thoenes & Thurn

(56) Entgegenhaltungen:
- EP-A- 0 097 443
- DE-A- 2 414 995
- DE-C- 896 873
- FR-A- 2 361 535

## Beschreibung

Die Erfindung betrifft einen Verschlußdeckel für einen Behälter, insbesondere einen Kfz-Kühler mit einem Deckelaußenteil, einem mit diesem verbundenen, in die zu verschließende Öffnung eintauchenden topfförmigen Deckelinnenteil und einem in diesem angeordneten Überdruckventil zum Öffnen und Schließen eines durch das Deckelinnenteil verlaufenden Druckausgleichskanals mit einem axial beweglichen ersten Ventilkörper, der eine erste ringförmige, zumindest annähernd achsnormale Dichtfläche trägt und mit dieser durch eine Feder nach innen, in Richtung auf den Boden des Deckelinnenteils gegen eine nach außen gerichtete, ringförmige erste Gegendichtfläche gespannt wird. Ein derartiger Verschlußdeckel ist zB. in EP-A- 0 097 443 gezeigt.

Ein Verschlußdeckel der vorstehend genannten Art für einen Kraftfahrzeugkühler soll in bekannter Weise während der Gebrauchsphase des Kraftfahrzeuges für einen Druckausgleich sorgen, wenn der Druck durch die Erwärmung des Kühlwassers in dem Kühler ansteigt und ein kritischer Druckwert erreicht oder überschritten wird. Wird das Fahrzeug abgestellt, steigt der Überdruck durch Stauwärme weiter an. Es besteht die Gefahr, daß in diesem Falle eine große Menge Kühlwassers verdunstet oder der Kühler gar leer kocht, so daß häufig Kühlwasser nachgefüllt werden muß.

Der Erfindung liegt die Aufgabe zugrunde, einen Verschlußdeckel der eingangs genannten Art anzugeben, mit dem einerseits ein Leerkochen des Kühlers verhindert und andererseits sichergestellt werden kann, daß der Kühler bei weiterem Ansteigen des Druckes dennoch nicht platzt.

Diese Aufgabe wird erfindungsgemäß dadurch gelöst, daß die erste Gegendichtfläche an einem zwischen zwei Endstellungen axial beweglichen zweiten Ventilkörper ausgebildet ist, der radial innerhalb der ersten Gegendichtfläche eine Öffnung hat und radial außerhalb der ersten Gegendichtfläche eine nach innen weisende zweite ringförmige Dichtfläche und eine nach außen weisende dritte ringförmige Dichtfläche hat, die in der jeweiligen Endstellung des zweiten Ventilkörpers an einer jeweils an dem Deckelinnenteil vorgesehenen zweiten, bzw. dritten Gegendichtfläche anliegen.

Bei der erfindungsgemäßen Lösung besteht die Möglichkeit, daß das Ventil nach Ansteigen des Behälterinnendruckes über einen ersten Grenzwert zunächst wie bei einem herkömmlichen Überdruckventil öffnet, wobei die zweite Dichtfläche von der zweiten Gegendichtfläche abhebt. Steigt der Druck nun weiter an, bewegen sich der erste und der zweite Ventilkörper gemeinsam gegen den Federdruck nach außen, bis die dritte Dichtfläche an dem zweiten Ventilkörper an der zugehörigen dritten Gegendichtfläche am Deckelinnenteil anschlägt und damit den Druckausgleichskanal wieder verschließt. Damit kann ein durch das unter Umständen kurzfristige Überhitzung des Behälterinnenraumes hervorgerufene Leerkochen des Behälters vermieden werden. Sollte die Wärme zuvor jedoch noch länger anhalten und der Behälterinnendruck weiter ansteigen, dann hebt der erste Ventilkörper von dem zweiten Ventilkörper ab, der seine äußere Endstellung erreicht hat und sich nicht weiter axial nach außen bewegen kann. Dadurch wird der Druckausgleichskanal wiederum geöffnet und wird auch erst dann wieder geschlossen, wenn der Druck abfällt und sich der erste Ventilkörper unter der Wirkung der Feder wieder axial nach innen bewegt. Bei der erfindungsgemäßen Lösung erfolgt also das Öffnen des Überdruckventils in zwei Stufen mit unterschiedlichen Druckschwellwerten und einem zwischenzeitlichen Schließen des Druckausgleichskanals.Es ist einsichtig, daß mehrere derartige Stufen kaskadenartig hintereinander geschaltet werden können.

Ein wesentliches Merkmal der erfindungsgemäßen Lösung besteht darin, daß für dieses mehrstufige Öffnen des Überdruckventils nicht mehrere Federn benötigt werden, deren Federkonstanten genau aufeinander abgestimmt werden müßten. Vielmehr werden die unterschiedlichen Druckschwellwerte allein durch das Flächenverhältnis der druckwirksamen Flächen an dem ersten und dem zweiten Ventilkörper bestimmt.

Vorzugsweise ist auch bei dem erfindungsgemäßen Verschlußdeckel das Überdruckventil in an sich bekannter Weise mit einem Unterdruckventil kombiniert, so daß ein beispielsweise beim Abkühlen eines Kühlers auftretender Unterdruck ebenfalls wieder ausgeglichen werden kann. Hierzu ist die Ausbildung des erfindungsgemäßen Verschlußdeckels so getroffen, daß der erste Ventilkörper die Form eines die Feder aufnehmenden Federtopfes hat mit einer Öffnung im Topfboden und einem radial auswärts gerichteten Flansch, an dem die erste Dichtfläche vorgesehen ist, daß der Federtopf in einen topfförmigen dritten Ventilkörper eingreift, an dessen Öffnungsrand eine zur Anlage an der ersten Dichtfläche bestimmte, radial innerhalb der ersten Gegendichtfläche liegende vierte Gegendichtfläche vorgesehen ist und der durch eine sich am Boden des Deckelinnenteils abstützende zweite Feder gegen die erste Dichtfläche gespannt wird, und daß der zweite Ventilkörper die Form einer den dritten Ventilkörper umgebenden Hülse hat mit einem radial auswärts gerichteten Flansch, an dem die Dicht- und Gegendichtflächen vorgesehen sind. Diese Anordnung gewährleistet einen sehr kompakten Aufbau des erfindungsgemäßen Verschlußdeckels.

Weitere Merkmale und Vorteile der Erfindung ergeben sich aus den weiteren Unteransprüchen und der folgenden Beschreibung, welche in Verbindung mit den beigefügten Zeichnungen die Erfindung anhand eines Ausführungsbeispieles erläutert. Es zeigen:
- Fig. 1: eine Draufsicht auf die Außenseite des erfindungsgemäßen Verschlußdeckels,
- Fig. 2 bis 6: jeweils einen die Deckelachse enthaltenden Schnitt entlang Linie II - II in Figur 1, wobei die Ventilkörper in verschiedenen Stellungen gezeigt sind, und
- Fig. 7: den in Figur 3 mit A bezeichneten Ausschnitt in vergrößertem Maßstab.

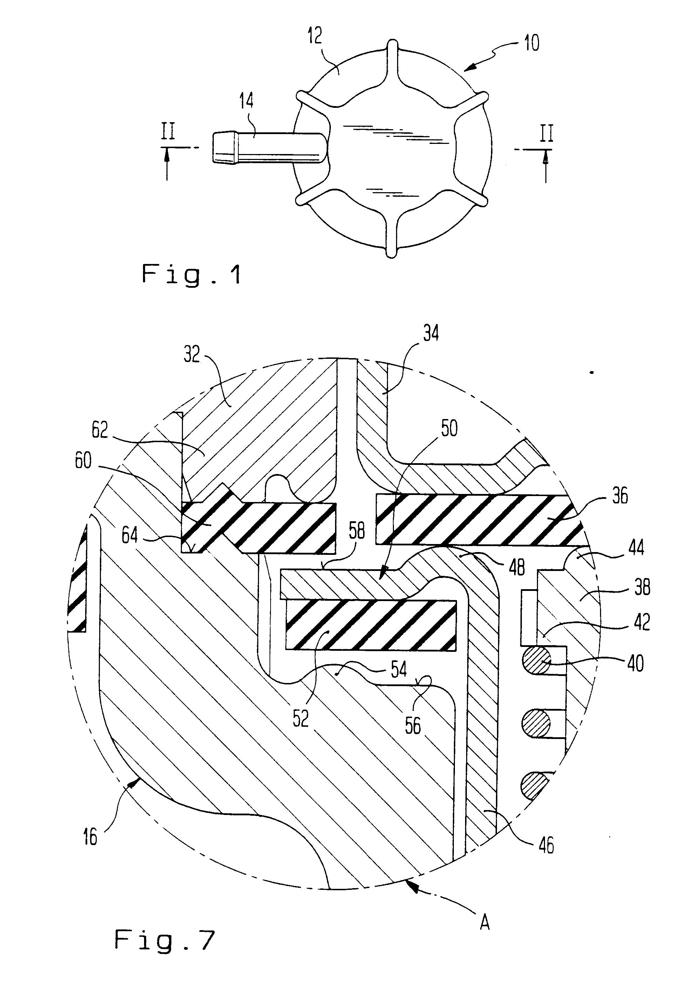

Figur 1 zeigt eine Draufsicht auf die Außenseite eines Kühlerdeckels 10 mit einem Deckelaußenteil 12, der über einen Stutzen 14 an einen nicht dargestellten Entlüftungsschlauch anschließbarist.

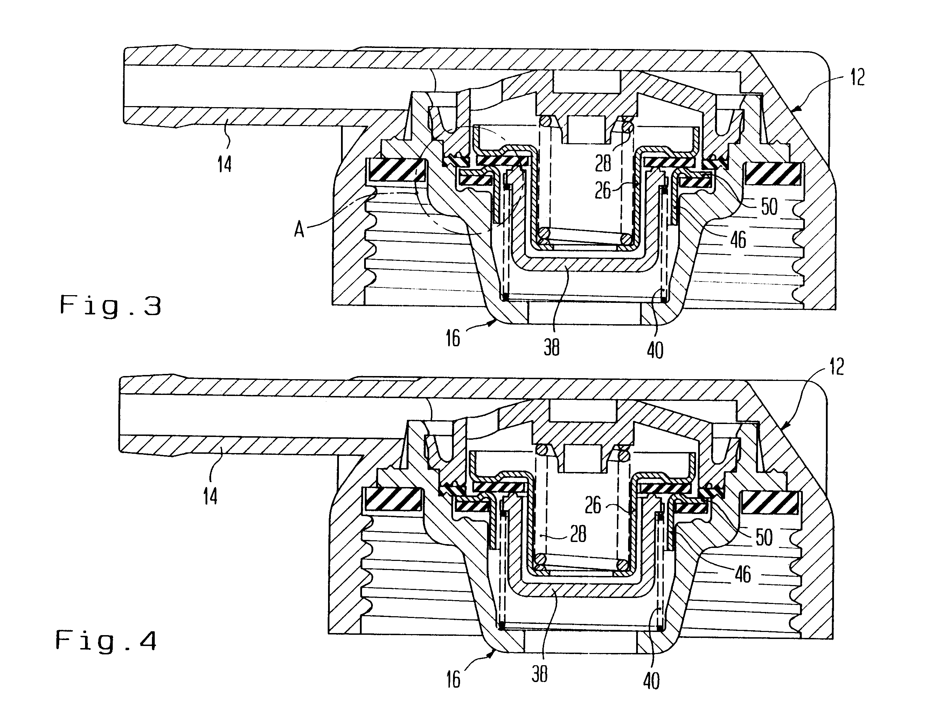

Gemäß den Figuren 3 bis 6 ist das Deckelaußenteil 12 mit einem topfförmigen Deckelinnenteil 16 verbunden, wobei die Verbindung auf irgendeine beliebige geeignete Weise erfolgen kann. Das Deckelinnenteil 16 ist zum Eingriff in die zu verschließende Öffnung eines nicht dargestellten Kühlerstutzens bestimmt, auf den das Deckelaußenteil 12 mit Hilfe eines Schraubansatzes 18 aufschraubbar ist. Dabei kommt der Stutzenrand an einem zwischen Deckelinnenteil 16 und Deckelaußenteil 12 angeordneten Dichtring 20 zur Anlage, so daß der Stutzen dicht verschließbar ist.

Wegen der großen Temperatur- und damit auch Druckunterschiede im Kühlerinnenraum zwischen dem Betriebszustand des Fahrzeuges und dem Ruhezustand des Fahrzeuges muß die Möglichkeit für einen Druckausgleich zwischen dem Kühlerinnenraum und der Umgebung vorgesehen sein. Hierzu ist in dem Deckelinnenteil 16 ein allgemein mit 22 bezeichnetes Überdruck/Unterdruckventil angeordnet, das einen zwischen dem Anschlußstutzen 14 des Deckelaußenteils 12 und einer Öffnung 24 im Boden des Deckelinnenteils 16 verlaufenden Druckausgleichskanal öffnen und schließen kann.

Das Überdruck/Unterdruckventil umfaßt in an sich bekannter Weise einen einen ersten Ventilkörper bildenden Federtopf 26, der eine erste Schraubendruckfeder 28 aufnimmt. Diese stützt sich einerseits am Boden 30 des Federtopfs 26 und andererseits an einem Verschlußteil 32 ab, das in das Deckelinnenteil 16 eingeklipst ist und dieses verschließt. Die Schraubendruckfeder 28 spannt den Federtopf 26 in Richtung auf den Boden des Deckelinnenteils 16, d.h. zum Behälterinnenraum hin vor. Der Federtopf 26 hat einen radial auswärts gerichteten Flansch 34, der an seiner nach innen weisenden achsnormalen Fläche einen elastischen Dichtring 36 trägt.

Der Federtopf 26 greift mit seinem Topfteil in einen einen dritten Ventilkörper bildenden geschlossenen Ventiltopf 38 ein. Dieser ist von einer zweiten Schraubendruckfeder 40 umschlossen, die sich einerseits am Boden des Deckelinnenteils 16 und andererseits an einem radial auswärts gerichteten Bund 42 des Ventiltopfes 38 abstützt und diesen mit einer am oberen Topfrand ausgebildeten Dichtrippe 44 gegen den Dichtring 36 spannt.

Der Ventiltopf 38 ist von einer zylindrischen Hülse 46 umgeben, die an ihrem äußeren Ende unter Bildung eines Dichtwulstes 48 in einen radial auswärts gerichteten Flansch 50 übergeht. Mit dem Dichtwulst 48 liegt die einen zweiten Ventilkörper bildende Hülse 46 an dem Dichtring 36 an. An der nach innen weisenden Seite trägt der Flansch 50 einen elastischen Dichtring 52, der zur Auflage auf einer Dichtrippe 54 bestimmt ist, die an einer achsnormalen Schulter 56 des Deckelinnenteils 16 ausgebildet ist. Mit seiner nach außen weisenden achsnormalen Fläche 58 ist der Flansch 50 zur Anlage an einem Dichtring 60 bestimmt, der zwischen einem radial äußeren Rand 62 des Verschlußteiles 32 und einer Schulter 64 des Deckelinnenteils 16 eingespannt ist.

Die Hülse 46 ist dabei axial zwischen einer ersten Innenstellung, die durch die Auflage des Dichtringes 52 auf der Dichtrippe 54 bestimmt wird, und einer zweiten Endstellung beweglich, die durch die Anlage des Flansches 50 an dem Dichtring 60 bestimmt wird.

Das soweit beschriebene Überdruck/Unterdruckventil des Verschlußdeckels arbeitet folgendermaßen:

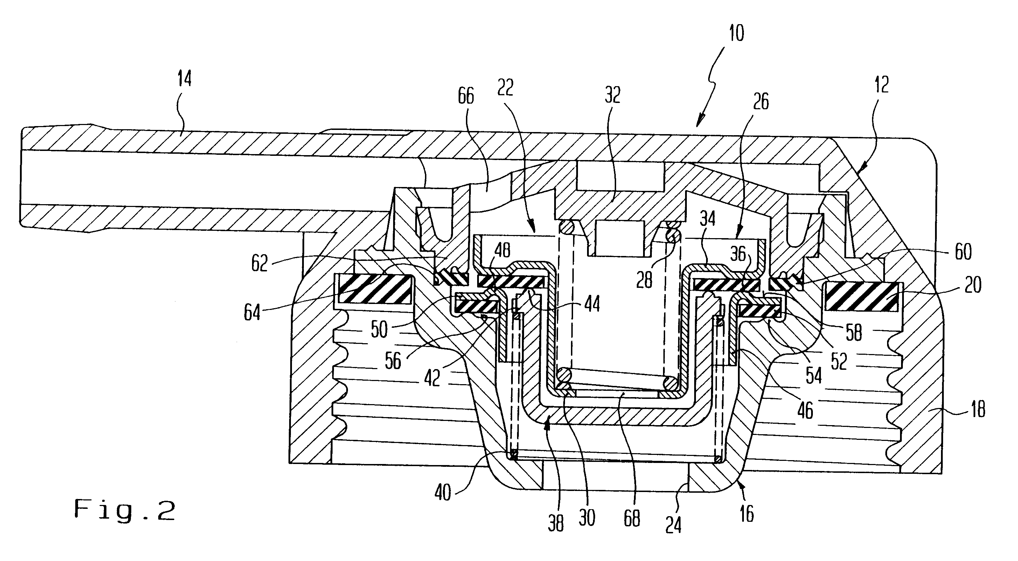

Figur 2 zeigt das Ventilsystem in dem Schließzustand, in dem der Druckausgleichskanal vollständig geschlossen ist. Dabei liegt die Hülse 46 mit ihrem Flansch 50 und dem von diesem getragenen Dichtring 52 auf der ringförmigen Dichtrippe 54 des Deckelinnenteils auf. Der unter der Vorspannung der Schraubendruckfeder 28 stehende Federtopf 26 liegt mit seinem Dichtring 36 auf dem Dichtwulst 48 der Hülse 46 auf und preßt diese wiederum gegen die Dichtrippe 54 des Deckelinnenteils 16. Der Ventiltopf 38 wird durch die Schraubendruckfeder 40 gegen den Dichtring 26 gespannt. Damit sind sämtliche Durchtrittsöffnungen des Überdruck/Unterdruckventils geschlossen. Diese Stellung wird innerhalb eines zwischen einem Unterdruckschwellwert und einem ersten Überdruckschwellwert liegenden Druckbereiches eingehalten.

Figur 3 zeigt eine Stellung, in der das Überdruckventil nach Überschreiten eines ersten Überdruckschwellwertes öffnet. Hierbei wirkt der Überdruck auf eine Kreisfläche, mit dem Durchmesser der Dichtrippe 54. Durch den Überdruck werden alle drei Ventilkörper 26, 38, 46 angehoben. Der Dichtring 52 hebt von der Dichtrippe 54 ab, so daß sich der Flansch 50 zusammen mit dem Dichtring 52 in einer mittleren Position zwischen seinen beiden Endstellungen befindet. Diese Stellung ist in Figur 3 und in vergrößertem Maßstab in Figur 7 dargestellt. Nun kann ein Druckausgleich durch die Öffnung 24 im Boden des Deckelteils 16, den Spalt zwischen der Dichtrippe 54 und dem Dichtring 52, um die Außenkante des Flansches 50 herum, am äußeren Rand des Flansches 34 des Federtopfes 26 vorbei durch eine Öffnung 66 in dem Verschlußteil 32 und den Anschlußstutzen 14 erfolgen. Dieser Zustand kann beispielsweise eintreten, wenn das Kraftfahrzeug nach längerer Fahrt abgestellt wird und die Stauwärme des Motors nicht ausreichend abgeführt werden kann. Steigen die Temperatur und damit der Druck innerhalb des Kühlers weiter an, so werden die drei Ventilkörper auch weiter angehoben, bis die Hülse 46 mit ihrem Flansch 50 ihre obere Endstellung erreicht, in der der Flansch 50 an dem Dichtring 60 anliegt. Nun ist der vorstehend beschriebene Weg für den Ausgleich des Überdrucks wieder verschlossen. In dieser in der Figur 4 dargestellten Ventilstellung wird ein Leerkochen des Kühlers vermieden.

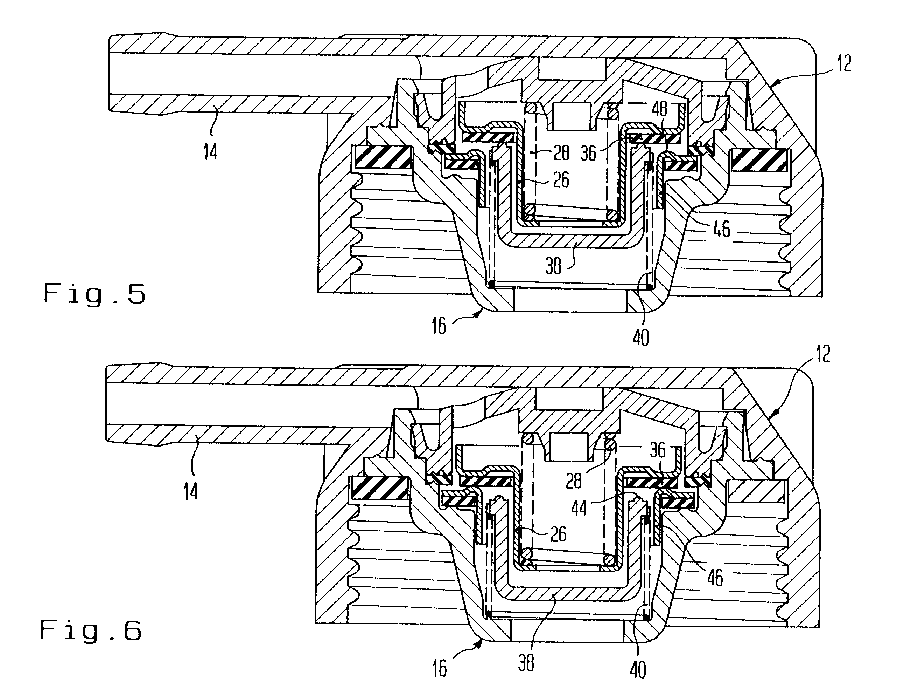

Sollte der Druck jedoch über einen weiteren Sicherheitsschwellwert ansteigen, bei dessen Überschreitung mit einem Platzen des Kühlers gerechnet werden muß, bewirkt der nun hohe Druck ein Abheben des Federtopfes 26 mit seinem Dichtring 36 von dem Dichtwulst 48 der Hülse 46, die ihre axial äußere Endstellung erreicht hat und sich daher nicht mehr weiter nach außen bewegen kann. Nun kann ein Überdruck durch die Hülse 46 und durch den Zwischenraum zwischen dem Dichtring 36 und dem Dichtwulst 48 hindurch erfolgen. Dieser Weg bleibt auch bei einem weiteren Druckanstieg offen und wird erst wieder durch einen Druckabfall geschlossen. Diese zweite Öffnungstellung des Überdruckventils ist in Figur 5 dargestellt.

Figur 6 zeigt den Fall, daß ein Unterdruckschwellwert unterschritten wird. In diesem Falle wird durch den Unterdruck im Kühler der Ventiltopf 38 gegen die Kraft der Feder 40 nach innen gezogen, so daß der obere Rand des Ventiltopfes 38 mit seiner ringförmigen Dichtrippe 44 von dem Dichtring 36 des Federtopfes 26 abhebt, der dieser Bewegung nicht folgen kann, da der Federtopf 26 zusammen mit der Hülse 46 durch die Schulter 56 des Deckelinnenteils 16 aufgehalten wird. Nun kann ein Unterdruckausgleich durch die Öffnung 24 im Boden des Deckelinnenteils 16, durch den Spalt zwischen Dichtrippe 44 und Dichtring 36 und durch eine Öffnung 68 im Boden des Federtopfes 26 hindurch erfolgen.

Wesentlich bei der vorstehend beschriebenen Lösung ist, daß das mehrstufige Öffnen des Überdruckventils durch einfachste Mittel ohne zusätzliche Federn und bei geringstem zusätzlichen Raumbedarf erzielt wird. Indem man einen weiteren der Hülse 46 entsprechenden Ventilkörper zwischen der Hülse 46 und dem Deckelinnenteil vorsieht, kann eine weitere Überdrucköffnungsstufe vorgesehen werden. Diese Stufen können also mehrfach kaskadenartig hintereinander geschaltet werden.

Es versteht sich, daß der vorstehend beschriebene Deckel nicht nur für Kühler sondern für alle Behälter geeignet ist, in denen ähnlich grobe Druckunterschiede wie bei Kraftfahrzeugkühlern auftreten können.

## Patentansprüche

1. Verschlußdeckel für einen Behälter, insbesondere einen Kraftfahrzeugkühler mit einem Deckelaußenteil (12), einem mit diesem verbundenen, in die zu verschließende Öffnung eintauchenden topfförmigen Deckelinnenteil (16) und einem in diesem angeordneten Überdruckventil zum Öffnen und Schließen eines durch das Deckelinnenteil (16) verlaufenden Druckausgleichskanals mit einem axial beweglichen ersten Ventilkörper (26), der eine erste ringförmige, zumindest annähernd achsnormale Dichtfläche (36) trägt und mit dieser durch eine Feder (28) nach innen, in Richtung auf den Boden des Deckelinnenteils (16) gegen eine nach außen gerichtete ringförmige erste Gegendichtfläche (48) gespannt wird, dadurch **gekennzeichnet**, daß die erste Gegendichtfläche (48) an einem zwischen zwei Endstellungen axial beweglichen zweiten Ventilkörper (46) ausgebildet ist, der radial innerhalb der ersten Gegendichtfläche (48) eine Öffnung hat und radial außerhalb der ersten Gegendichtfläche eine nach innen weisende zweite ringförmige Dichtfläche (52) und eine nach außen weisende dritte ringförmige Dichtfläche (58) hat, die in der jeweiligen Endstellung des zweiten Ventilkörpers (46) an einer jeweils an dem Deckelinnenteil (16) vorgesehenen zweiten bzw. dritten Gegendichtfläche (54) bzw. (60) anliegen.

2. Verschlußdeckel nach Anspruch 1, dadurch **gekennzeichnet**, daß der die Feder (28) aufnehmende erste Ventilkörper (26) die Form eines Federtopfes hat mit einer Öffnung (68) im Topfboden und einem radial auswärts gerichteten Flansch (34), an dem die erste Dichtfläche (32) vorgesehen ist, daß der Federtopf (26) in einen topfförmigen dritten Ventilkörper (38) eingreift, an dessen Öffnungsrand eine zur Anlage an der ersten Dichtfläche (32) bestimmte, radial innerhalb der ersten Gegendichtfläche (48) liegende vierte Gegendichtfläche (44) vorgesehen ist und der durch eine sich am Boden des Deckelinnenteils abstützende zweite Feder (40) gegen die erste Dichtfläche (32) gespannt wird, und daß der zweite Ventilkörper (46) die Form einer den dritten Ventilkörper (38) umgebenden Hülse hat mit einem radial auswärts gerichteten Flansch (50) an dem die Dicht- und Gegendichtflächen (52, 58; 48) vorgesehen sind.

3. Verschlußdeckel nach Anspruch 1 oder 2, dadurch **gekennzeichnet**, daß jeweils eine der Flächen eines zusammenwirkenden Paares von Dichtflächen und Gegendichtflächen an einem von dem jeweiligen Ventilkörper (26, 46, 38) oder dem Deckelinnenteil (16) gehaltenen elastischen Dichtring (32, 52, 60) und die jeweils andere Fläche an dem jeweiligen Ventilkörper (28, 46, 38) bzw. an dem Deckelinnenteil (16) ausgebildet ist.

## Claims

1. A closure cap for a container, more particularly a motor vehicle radiator, comprising an outer cap part (12), a pot-shaped inner cap part (16) connected thereto and adapted to penetrate into the opening for closure, and a relief valve disposed in the inner cap part (16) for opening and closing a pressure equalisation duct extending through the inner cap part (16) and having an axially movable first valve member (26) bearing a first annular at least approximately axis-normal sealing surface (36) by which it is tensioned, by means of a spring (28), (inwardly) in the direction of the base of the inner cap part (16) against an outwardly directed annular first companion sealing surface (48), characterised in that the first companion sealing surface (48) is formed on a second valve member (46) which is axially movable between two end positions and which, radially inside the first companion sealing surface (48), has an opening and, radially outside the first companion sealing surface, an inwardly pointing second annular sealing surface (52) and an outwardly pointing third annular sealing surface (58) which, in the associated end position of the second valve member (46), bear against a second and third companion sealing surface (54) and (60) respectively each provided on the inner cap part (16).

2. A closure cap according to claim 1, characterised in that the first valve member (26) receiving the spring (28) is in the form of a spring pot with an opening (68) in the base of the pot and a radially outwardly directed flange (34) on which the first sealing surface (32) is provided, in that the spring pot (26) engages in a pot-shaped third valve member (38), at the opening edge of which there is provided a fourth companion sealing surface (44) intended for engagement with the first sealing surface (32) and situated radially inside the first companion sealing surface (48), said third valve member (38) being tensioned against the first sealing surface (32) by a second spring (40) bearing against the base of the inner cap part, and in that the second valve member (46) is in the form of a sleeve surrounding the third valve member (38) and having a radially outwardly directed flange (50) on which the sealing and companion sealing surfaces (52, 58; 48) are provided.

3. A closure cap according to claim 1 or 2, characterised in that one in each case of the surfaces of a co-operating pair of sealing surfaces and companion sealing surfaces is formed on an elastic sealing ring (32, 52, 60) held by the associated valve member (26, 46, 38) or the inner cap part (16) and the other surface in each case is formed on the associated valve member (28, 46, 38) on the inner cap part (16).

## Revendications

1. Bouchon de fermeture pour une récipient, notamment pour un radiateur de véhicule automobile, avec une partie extérieure de bouchon (12), une partie intérieure de bouchon (16) en forme de cuvette, assemblée à la partie extérieure et s'enfonçant dans l'ouverture à fermer, et avec une soupape de surpression disposée dans la partie intérieure, destinée à ouvrir ou fermer un canal d'équilibrage de pression traversant la partie intérieure de bouchon (16) et comportant un premier corps de soupape (26) axialement mobile, qui porte une première surface d'étanchéité (36) annulaire au moins approximativement perpendiculaire à l'axe, avec laquelle il est pressé par un ressort (28), (vers l'intérieur) en direction du fond de la partie intérieure de bouchon (16), contre une première contre-surface d'étanchéité annulaire (48), tournée vers l'extérieur, charactérisé en ce que la première contre-surface d'étanchéité (48) est configurée sur un deuxième corps de soupape (46) axialement mobile entre deux positions extrêmes, qui possède une ouverture radialement à l'intérieur de la première contre-surface d'étanchéité (48) et, radialement a l'extérieur de cette première contre-surface d'étanchéité, une deuxième surface d'étanchéité annulaire (52) tournée vers l'intérieur et une troisième surface d'étanchéité annulaire (58) tournée vers l'extérieur, lesdites surfaces, dans la position extrême correspondante du deuxième corps de soupape (46), s'appliquant respectivement contre une deuxième (54) et une troisième (60) contre-surfaces d'étanchéité, prévues sur la partie intérieure de bouchon (16).

2. Bouchon de fermeture selon la revendication 1, caractérisé en ce que le premier corps de soupape (26), qui reçoit le ressort (28), a la forme d'une cuvette de ressort avec une ouverture (68) dans le fond de la cuvette et avec une bride (34) dirigée radialement vers l'extérieur, sur laquelle est agencée la première surface d'étanchéité (36), en ce que la cuvette de ressort (26) s'engage dans un troisième corps de soupape (38) en forme de cuvette, sur le bord d'ouverture duquel est prévue une quatrième contre-surface d'étanchéité (44), située radialement à l'intérieur de la première contre-surface d'étanchéité (48) et destinée à s'appliquer contre lal première surface d'étanchéité (36), et qui est pressé contre la première surface d'étanchéité (36) par un deuxième ressort (40) s'appuyant contre le fond de la partie intérieure de bouchon, et en ce que le deuxième corps de soupape (46) a la forme d'un manchon entourant le troisième corps de soupape (38) et présentant une bride (50) dirigée radialement vers l'extérieur, sur laquelle sont prévues les surfaces et contre-surfaces d'étanchéité (52, 58; 48).

3. Bouchon de fermeture selon la revendication 1 ou 2, charactérisé en ce qu'une des surfaces des paires respectives de surfaces et contre-surfaces d'étanchéité coopérantes est configurée sur une bague d'étanchéité élastique (36, 52, 60) maintenue par le corps de soupape respectif (26, 46, 48) ou par la partie intérieure de bouchon (16), tandis que l'autre surface est configurée sur le corps de soupape respectif (26, 46, 38) ou sur la partie intérieure de bouchon (16).
